# EUROPÄISCHE PATENTSCHRIFT

(11) **EP 3 076 056 B1**
(45) Veröffentlichungstag und Bekanntmachung des Hinweises auf die Patenterteilung: **29.11.2017**
(21) Anmeldenummer: 15161656.2
(22) Anmeldetag: 30.03.2015
(51) Int. Cl.: F16K 11/16, F16K 11/18, F16K 31/00

(54) **MEHRWEGEVENTIL**
MULTI-PORT VALVE
VANNE MULTI-VOIES

(43) Veröffentlichungstag der Anmeldung: 05.10.2016
(73) Patentinhaber: Asco Numatics GmbH, 75248 Ölbronn-Dürrn (DE)
(72) Erfinder: Schuler, Manuel, 75228 Ispringen (DE); Wegehingel, Stefan, 75180 Pforzheim (DE); Ams, Felix, 75236 Kämpfelbach (DE)
(74) Vertreter: Witte, Weller & Partner Patentanwälte mbB

(56) Entgegenhaltungen:
- EP-A1- 2 518 378
- US-A- 2 311 465

## Beschreibung

Die vorliegende Erfindung betrifft ein Mehrwegeventil mit einem Ventilgehäuse, in dem eine Ventilkammer ausgebildet ist, in die zumindest drei Anschlusskanäle führen, wobei zwischen dem ersten und dem dritten Anschlusskanal ein erstes Ventil und zwischen dem zweiten und dem dritten Anschlusskanal ein zweites Ventil angeordnet ist, und wobei in dem Ventilgehäuse ein elektrisch angesteuerter Aktor angeordnet ist, der zumindest zwei Arbeitsstellungen aufweist, wobei der Aktor in der ersten Arbeitsstellung auf das erste Ventil und in der zweiten Arbeitsstellung auf das zweite Ventil einwirkt.

Auf diese Weise können zwei 2/2-Ventile ein 3/3-Ventil bilden.
Aus der EP 2 518 378 B1 ist ein Piezo-Ventil bekannt, mit einem Ventilkörper, der wenigstens einen Anschluss aufweist, durch welchen ein Fluid eingeführt wird, einer internen Kammer, welche mit dem Anschluss kommuniziert, wenigstens einem Ventilsitz, durch welchen das Fluid strömt, einer Schaltplatte zur Bereitstellung einer elektrischen Spannung, einer Ventileinheit, die den Ventilsitz des Ventilkörpers öffnet oder schließt, und mit einer Piezo-Platte, die in Reaktion auf die elektrische Spannung, welche durch die Schaltplatte bereitgestellt wird, durch Biegung zu einer von sich gegenüberliegenden Seiten gespannt wird, und somit die Ventileinheit bewegt.
Aus der US 2,311,465 A ist eine Ventilanordnung zum Steuern des Durchgangs von Fluid bekannt, umfassend ein Ventilgehäuse mit einer Mehrzahl von Öffnungen, eine Mehrzahl von Ventilelementen, die beweglich in dem Gehäuse angebracht sind, um den Durchgang von Fluid durch mindestens zwei der Öffnungen zu steuern, einem einzigen Betätigungshebel, zur Betätigung der Ventilelemente, und mit einem Halter, der bestimmte Soll-Lagen für den Betätigungshebel definiert.

Derartige Ventile erlauben beispielsweise die wahlweise Verbindung zwischen dem ersten und dem dritten oder dem zweiten und dem dritten Anschlusskanal. Diese Mehrwegeventile werden für zahlreiche Steuerungs- und Versorgungsaufgaben verwendet, sie dienen zum Leiten und Schalten sowie Regeln beliebiger Fluide.

Beispielsweise ist es möglich, über den ersten Anschlusskanal ein Fluid unter Druck zuzuführen, das aus dem dritten Anschlusskanal austritt, wobei über den zweiten Anschlusskanal der Druck in der Ventilkammer verringert werden kann.

Mit anderen Worten, der erste Anschlusskanal dient zum Belüften und der zweite Anschlusskanal zum Entlüften der Ventilkammer und damit zur Steuerung des Drucks an dem dritten Anschlusskanal.

Derartige Mehrwegeventile unterliegen wie andere Bauteile auch den Anforderungen an immer kleinere Abmaße und immer geringeren Energieverbrauch.

Vor diesem Hintergrund liegt der vorliegenden Erfindung die Aufgabe zugrunde, ein Mehrwegeventil der eingangs genannten Art zu schaffen, das einen geringen Energieverbrauch und kleine Abmessungen aufweist, aber dennoch konstruktiv einfach und preiswert aufgebaut ist.

Bei dem eingangs erwähnten Mehrwegeventil wird diese Aufgabe dadurch gelöst, dass dem ersten Ventil eine erste Rückstelleinrichtung zugeordnet ist, die das erste Ventil durch Federspannung in seine Ruhestellung vorspannt, und dem zweiten Ventil eine zweite Rückstelleinrichtung zugeordnet ist, die das zweite Ventil durch Federspannung in seine Ruhestellung vorspannt.

Das Mehrwegeventil baut sehr klein, weil nur ein Aktor vorgesehen ist, der beide Ventile betätigt. Da der Aktor entweder das erste oder das zweite Ventil betätigt, muss er lediglich die Kraft zum Öffnen bzw. Schließen eines Ventils aufbringen, was auch energetisch von Vorteil ist.
Diese Maßnahme ist energetisch von Vorteil, denn die beiden Ventile werden lediglich durch Federspannung in ihre Ruhestellung vorgespannt, aktive Elemente zur Sicherstellung der Ruhestellung der beiden Ventile sind nicht erforderlich.
Die dabei eingesetzte Federspannung kann so ausgewählt werden, dass die Ventile in ihrer Ruhestellung sicher geschlossen sind, wenn es sich um Öffner handelt. Weil der eingesetzte piezoelektrische Biegewandler hohe Stellgeschwindigkeiten und/oder hohe Stellkräfte bereitstellt, ist dennoch ein schnelles und sicheres Öffnen der beiden Ventile gewährleistet.

Die der Erfindung zugrundeliegende Aufgabe wird auf diese Weise vollkommen gelöst.

In einer Weiterbildung ist es bevorzugt, wenn der Aktor eine stromlose Ruhestellung aufweist, in der er weder auf das erste noch auf das zweite Ventil einwirkt.

Bei dieser Maßnahme ist von Vorteil, dass das neue Mehrwegeventil noch stromsparender aufgebaut sein kann, weil nämlich in der Ruhestellung des Aktors keine Energie erforderlich ist, um den Zustand aufrecht zu erhalten, in den weder das erste noch das zweite Ventil betätigt ist. Dies kann ein Zustand sein, in dem beide Ventile geschlossen sind, es kann aber auch ein Zustand sein, in dem eines der beiden Ventile geöffnet ist.

Mit anderen Worten, das erste und das zweite Ventil können als Öffner oder Schließer oder eines der beiden als Öffner und das andere als Schließer ausgebildet sein.

Besonders bevorzugt ist es dabei, wenn der Aktor ein piezoelektrischer Biegewandler ist, der an seinem ersten Ende in dem Ventilgehäuse eingespannt ist und mit seinem zweiten Ende in der ersten Arbeitsstellung auf das erste Ventil und in der zweiten Arbeitsstellung auf das zweite Ventil einwirkt.

Hier ist von Vorteil, dass mit dem piezoelektrischen Biegewandler ein sehr leistungsfähiger und stromsparender Aktor verwendet wird, der zudem sehr kompakt aufgebaut ist und eine hohe Stellgeschwindigkeit aufweist. Bezüglich Leistungsfähigkeit, Stromaufnahme und Abmaße sowie Stellgeschwindigkeit weist ein piezoelektrischer Biegewandler erhebliche Vorteile gegenüber dem üblicherweise in Mehrwegeventilen eingesetzten Elektromagneten auf. Zudem weist ein piezoelektrischer Biegewandler eine sehr hohe Lebensdauer auf.

Aus der DE 44 10 153 C1 ist es bereits bekannt, einen piezoelektrischen Mehrschicht-Biegewandler zur Betätigung eines 2/2-Wegeventils einzusetzen.

Ein piezoelektrischer Biegewandler mit zwei Arbeitsstellungen ist beispielsweise in der EP 1 019 972 B1 beschrieben. Ein derartiger piezoelektrischer Mehrschicht-Biegewandler kann zur Realisierung der vorliegenden Erfindung verwendet werden, so dass insbesondere auf die EP 1 019 972 B1 Bezug genommen wird.

Besonders bevorzugt ist es dabei, wenn die erste und/oder die zweite Rückstelleinrichtung in ihrer Federspannung einstellbar ist.

Diese Maßnahme ist konstruktiv von Vorteil, denn die Ruhestellungen der beiden Ventile können so genau eingestellt werden. Auf diese Weise können die Ruhestellungen der Ventile auf die Ruhestellung des Aktors abgestimmt und mögliche Bauteilschwankungen ausgeglichen werden. Diese Maßnahme ist also insbesondere konstruktiv von Vorteil.

Weiter ist es bevorzugt, wenn der erste Anschlusskanal über eine erste Kanalmündung in die Ventilkammer mündet, die erste Kanalmündung mit einem ersten Ventilsitz versehen ist, der mit einem ersten Dichtelement zusammenwirkt, um die erste Kanalmündung wahlweise zu verschließen oder freizugeben, und der zweite Anschlusskanal über eine zweite Kanalmündung in der Ventilkammer mündet, die zweite Kanalmündung mit einem zweiten Ventilsitz versehen ist, der mit einem zweiten Dichtelement zusammenwirkt, um die zweite Kanalmündung wahlweise zu verschließen oder freizugeben.

Auch diese Maßnahmen sind konstruktiv von Vorteil, denn das neue Mehrwegeventil ist so einfach aufgebaut und weist nur geringe Abmessungen auf.

Weiter ist es bevorzugt, wenn der erste und/oder der zweite Ventilsitz axial verstellbar sind.

Hier ist von Vorteil, dass die Ruhestellung des ersten und zweiten Ventilsitzes einstellbar sind. Auf diese Weise können die Ruhestellungen der Ventile auf die des Aktors abgestimmt und Bauteilschwankungen ausgeglichen werden.

Diese Maßnahme kann alternativ oder zusätzlich zu der Einstellung der Federspannung der ersten und zweiten Rückstelleinrichtung verwendet werden.

Allgemein ist es bevorzugt, wenn der Aktor in seiner ersten Arbeitsstellung mit dem ersten Dichtelement und in seiner zweiten Arbeitsstellung mit dem zweiten Dichtelement zusammenwirkt, wobei vorzugsweise ein erster Betätiger vorgesehen ist, der das erste Dichtelement trägt, und der an seinem ersten Ende mit dem Ventilgehäuse verbunden ist, wobei der Aktor auf den Betätiger einwirkt, und wenn ferner vorzugsweise ein zweiter Betätiger vorgesehen ist, der das zweite Dichtelement trägt, und der an seinem ersten Ende mit dem Ventilgehäuse verbunden ist, wobei der Aktor auf den Betätiger einwirkt.

Diese Maßnahmen ermöglichen einen konstruktiv einfachen Aufbau des neuen Mehrwegeventils, wobei auch geringe Abmessungen realisierbar sind.

Jedes Ventil weist einen Betätiger auf, der an seinem freien Ende ein Dichtelement trägt, das beispielsweise in Ruhestellung auf der zugeordneten Kanalmündung aufliegt.

Der Aktor muss jetzt lediglich mit seinem freien Ende so auf den Betätiger einwirken, dass dieser das Dichtelement von der Kanalmündung abhebt.

Dabei ist es besonders bevorzugt, wenn der Aktor mit seinem ersten Ende zwischen dem ersten Ende des ersten und dem ersten Ende des zweiten Betätigers eingespannt ist, wobei vorzugsweise zwischen dem ersten Ende des Aktors und dem ersten Ende des ersten sowie dem ersten Ende des zweiten Betätigers jeweils ein elektrisch isolierender Abstandshalter angeordnet ist, wobei ferner vorzugsweise die erste und die zweite Kanalmündung antiparallel in einer Trennebene nebeneinander liegen.

Bei dieser Maßnahme ist von Vorteil, dass das neue Mehrwegeventil sehr einfach aufgebaut sein kann. Die Biegung des Aktors nach oben öffnet beispielsweise das erste Ventil, während die Biegung des Aktors nach unten das zweite Ventil öffnet. Wenn sich der Aktor dagegen in seiner Ruhestellung befindet, wirkt er weder auf das erste noch auf das zweite Ventil ein, so dass auch die beiden Ventile dann in ihren Ruhestellungen sind.

Wenn die erste und die zweite Kanalmündung antiparallel in einer Trennebene nebeneinander liegen, können beide Ventile als Öffner ausgebildet sein, wobei das erste Dichtelement zum Öffnen nach oben und das zweite Dichtelement zum Öffnen nach unten von der zugeordneten Kanalmündung abgehoben wird.

Auf diese Weise ergibt sich ein sehr symmetrischer Aufbau des Mehrwegeventils, insbesondere die beiden Betätiger können identisch ausgebildet sein.

Dabei ist es bevorzugt, wenn der erste und der zweite Betätiger an seinem ersten Ende jeweils eine Blattfeder und an seinem freien zweiten Ende jeweils eine Lasche aufweist, an der das jeweilige Dichtelement angeordnet ist, wobei die beiden Laschen antiparallel nebeneinander in der Trennebene liegen, wenn die beiden Ventile in ihrer Ruhestellung sind.

Dies hat den bereits erwähnten konstruktiven Vorteil, dass zum Öffnen des einen Ventils die zugeordnete Lasche nach oben und Öffnen des anderen Ventils die zugeordnete Lasche nach unten bewegt werden müssen, was durch das entsprechende Verschwenken des Aktors erfolgt.

Weiter bevorzugt ist es dann, wenn jede Lasche über einen Verbindungssteg mit der Blattfeder verbunden ist, wobei der Verbindungssteg unter einem Winkel zu der Blattfeder und der Lasche verläuft, und Lasche und Blattfeder jeweils parallel zueinander ausgerichtet sind.

Auch diese Maßnahme ist konstruktiv von Vorteil, die Blattfedern beider Ventile können identisch ausgebildet sein, sie werden bei der Montage nur um 180° umgeklappt eingebaut. Die Verbindungsstege verlaufen dann jeweils bis etwa zur Mittelebene des Aktors, die in der Trennebene liegt, in der die beiden Kanalmündungen antiparallel öffnen.

Dabei ist es weiter bevorzugt, wenn die Lasche maximal halb so breit ist wie die Blattfeder.

Hier ist von Vorteil, dass die beiden Betätiger deckungsgleich übereinanderliegen können, wobei zwischen den Blattfedern symmetrisch der Aktor liegt, der in ganzer Breite auf die beiden Verbindungsstege wirken kann. Hier ist weiter von Vorteil, dass nicht die Gefahr besteht, dass die Betätiger beim Öffnen verkanten oder verklemmen können.

Weil die Laschen nur halb so breit sind wie die Blattfedern, können diese nebeneinander in der Trennebene liegen.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: eine schematische Seitenansicht des neuen Mehrwegeventils, geschnitten längs der Linie I-I aus Fig. 2;
- Fig. 2: eine schematische Schnittdarstellung des neuen Mehrwegeventils, gesehen längs der Linie II-II aus Fig. 1;
- Fig.3: eine Darstellung wie Fig. 2, jedoch gesehen längs der Linie III-III aus Fig.1;
- Fig. 4: eine Draufsicht auf die beiden Betätiger aus dem Mehrwegeventil aus Fig. 1, wobei die beiden Betätiger in ihrer Einbaulage nebeneinander dargestellt sind; und
- Fig. 5: eine Draufsicht auf das Unterteil des Ventilgehäuses des Mehrwegeventils aus Fig. 1.

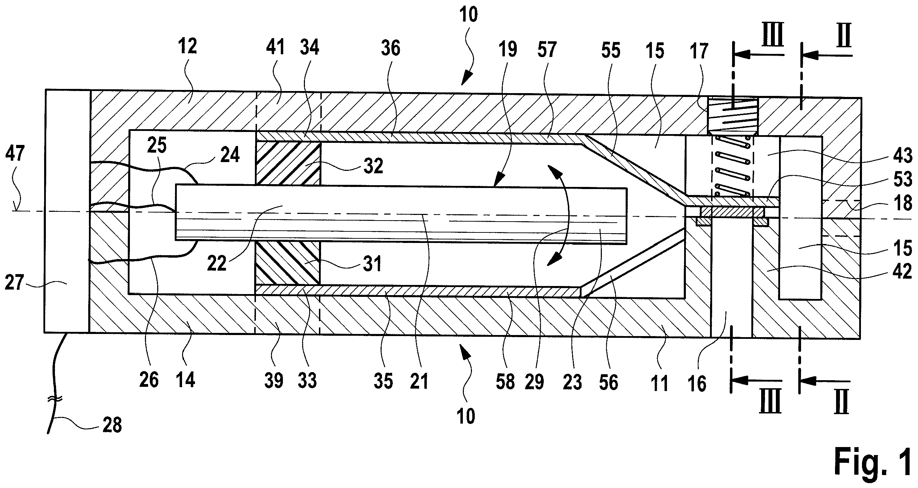

In Fig. 1 ist sehr schematisch und nicht maßstabsgetreu in einer geschnittenen Seitenansicht ein Mehrwegeventil 10 gezeigt, das ein Ventilgehäuse 11 aufweist, das aus einem Oberteil 12 sowie einem Unterteil 14 besteht.

Oberteil 12 und Unterteil 14 sind identisch zueinander aufgebaut.

In dem Ventilgehäuse 11 ist eine verzweigte Ventilkammer 15 ausgebildet, in die ein erster Anschlusskanal 16, ein zweiter Anschlusskanal 17 sowie ein dritter Anschlusskanal 18 hineinführen. Der dritte Anschlusskanal 18 ist jeweils zur Hälfte in dem Oberteil 12 und dem Unterteil 14 ausgebildet.

An die Anschlusskanäle 16, 17, 18 können in üblicher Weise Anschlussoliven oder ähnliche Verbindungselemente angeschlossen werden, um einen Fluidfluss durch das Mehrwegeventil 10 steuern zu lassen.

In dem Ventilgehäuse 11 ist ferner ein Aktor 19 angeordnet, der als piezoelektrischer Biegewandler 21 ausgebildet ist.

Der Biegewandler 21 weist ein erstes Ende 22 auf, das in dem Ventilgehäuse 11 festgelegt ist, sowie ein freies Ende 23, über das in noch zu beschreibender Weise der Fluid durch das Mehrwegeventil 10 gesteuert wird.

An seinem zweiten Ende 23 ist der Biegewandler mit drei Kabeln 24, 25, 26 versehen, die zu einer an dem Ventilgehäuse 11 angeordneten Steuerelektronik 27 führen, die mit einem Steuerkabel 28 verbunden ist.

Wie es beispielsweise in der eingangs erwähnten EP 1 019 972 B1 beschrieben ist, kann durch entsprechende Ansteuerung über das Steuerkabel 28 bewirkt werden, dass das freie Ende 23 des Biegewandlers 21 sich längs des schematisch angedeuteten Doppelpfeils 29 in Fig. 1 nach oben oder nach unten bewegt.

In Fig. 1 ist der Biegewandler 21 in seiner stromlosen Ruhestellung gezeigt.

Durch entsprechende Strombeaufschlagung kann sich das zweite Ende des Biegewandlers 21 nach oben in seine erste Arbeitsstellung oder nach unten in seine zweite Arbeitsstellung bewegen.

An seinem ersten Ende 22 ist der Biegewandler 21 über zwei elektrisch isolierende Abstandshalter 31 und 32 in Anlage mit ersten Enden 33 und 34 von Betätigern 35 und 36, die wiederum innen an dem Oberteil 12 bzw. Unterteil 14 anliegen.

In dem Unterteil 14 bzw. dem Oberteil 12 sind Klemmelemente 39 bzw. 41 vorgesehen, die nach Art einer Klemmschraube ausgebildet sein können, über die der Biegewandler 21 sowie die beiden Betätiger 35 und 36 symmetrisch in der Ventilkammer 15 ausgerichtet und fixiert werden können.

In den Darstellungen der Fig. 1,2 und 3 ist zu erkennen, dass der erste Anschlusskanal 16 in einem in dem Unterteil 14 ausgebildeten Steg 42 verläuft, während der zweite Anschlusskanal 17 in einem in dem Oberteil 12 ausgebildeten Steg 43 verläuft. In den Stegen 42 und 43 öffnen sich die Kanalmündungen 44 bzw. 45 des ersten und zweiten Anschlusskanals 16 bzw. 17. Auf diese Weise liegen die beiden Kanalmündungen 44 und 45 antiparallel in einer Trennebene 46, die gleichzeitig der in Fig. 1 erkennbaren Mittelebene 47 des Biegewandlers 21 entspricht.

Auf diese Weise ist das neue Mehrwegeventil symmetrisch zu der Mittelebene 47 aufgebaut.

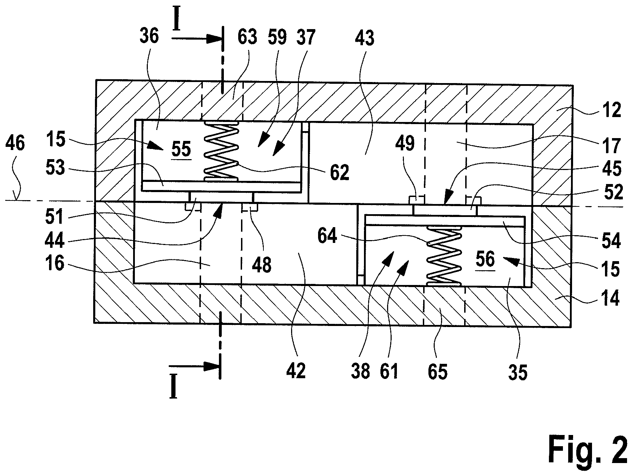

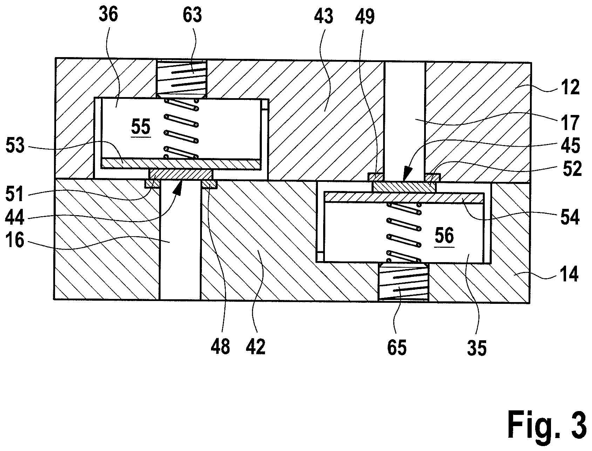

Aus den Fig. 2 und 3 ist zu erkennen, dass sich die beiden Stege 42 und 43 teilweise überlappen, dass aber oberhalb des Steges 42 sowie unterhalb des Steges 43 jeweils ein Teil der Ventilkammer 15 gebildet ist, die sich in Fig. 1 auch rechts und links von den beiden Stegen 42 und 43 erstreckt.

In dem Luftraum oberhalb des Steges 42 ist das Ventil 37 angeordnet, während sich in dem Luftraum unterhalb des Steges 43 das Ventil 38 befindet.

In den Fig. 2 und 3 ist zu erkennen, dass die erste Kanalmündung 44 von einem ersten Ventilsitz 48 umgeben ist, während die zweite Kanalmündung 45 von einem zweiten Ventilsitz 49 umgeben ist.

In an sich bekannter Weise sind die Ventilsitze 48 und 48 axial verstellbar.

Die Ventilsitze 48 und 49 werden über Dichtelemente 51 und 52 abgedichtet, die an Laschen 53 und 54 ausgebildet sind, die über entsprechende Verbindungsstege 55 bzw. 56 mit den Betätigern 36 bzw. 35 verbunden sind.

Insbesondere in Fig. 1 ist zu erkennen, dass die Betätiger 35 bzw. 36 an Ihrem ersten, hinteren Ende 33 bzw. 34 als Blattfeder 57 bzw. 58 ausgebildet sind.

Die Verbindungsstege 55 bzw. 56 sind gegenüber den Blattfedern 36 bzw. 35 abgewinkelt und verlaufen in Richtung der Mittelebene 47, wo sie in gegenüber den Verbindungsstegen 55 und 56 wiederum abgewinkelte Laschen 53 bzw. 54 übergehen, die wieder parallel zu den Blattfedern 57 bzw. 58 ausgerichtet sind.

Die beiden Ventile 36 und 37 weisen noch jeweils eine Rückstelleinrichtung 59 bzw. 61 auf, die jeweils eine Druckfeder 62, 64 sowie eine Stellschraube 63, 65 umfassen.

Über die Stellschrauben 63, 65 können die Druckfedern 62, 64 so eingestellt werden, dass sie mit hinreichendem Druck die Laschen 53, 54 und somit die Dichtelemente 51, 52 auf die entsprechenden Kanalmündungen 44, 45 drücken.

Über die einstellbaren Ventilsitze 48 und 49 sowie über die einstellbaren Rückstelleinrichtungen 59 und 61 können somit die beiden Dichtelemente so eingestellt werden, dass sie exakt in der Trennebene 46 liegen.

Wenn jetzt der Biegewandler 41 so bestromt wird, dass er sich mit seinem zweiten Ende 23 in Fig. 1 nach oben bewegt, drückt er gegen den Verbindungssteg 55 und hebt somit die Lasche 53 und das von ihr getragene Dichtelement 51 von der Kanalmündung 54 ab.

Wird der Biegewandler 21 dagegen umgekehrt bestromt, bewegt sich sein Ende 23 in Fig. 1 nach unten und wirkt somit auf den Verbindungssteg 46 ein, wodurch die Lasche 54 mit dem Dichtelement 52 von der Kanalmündung 45 abgehoben wird.

Wie bereits erwähnt, ist das neue Mehrwegeventil sehr symmetrisch aufgebaut, was nicht nur für Oberteil 12 und Unterteil 14 sowie auch für die beiden Betätiger 35, 36 gilt.

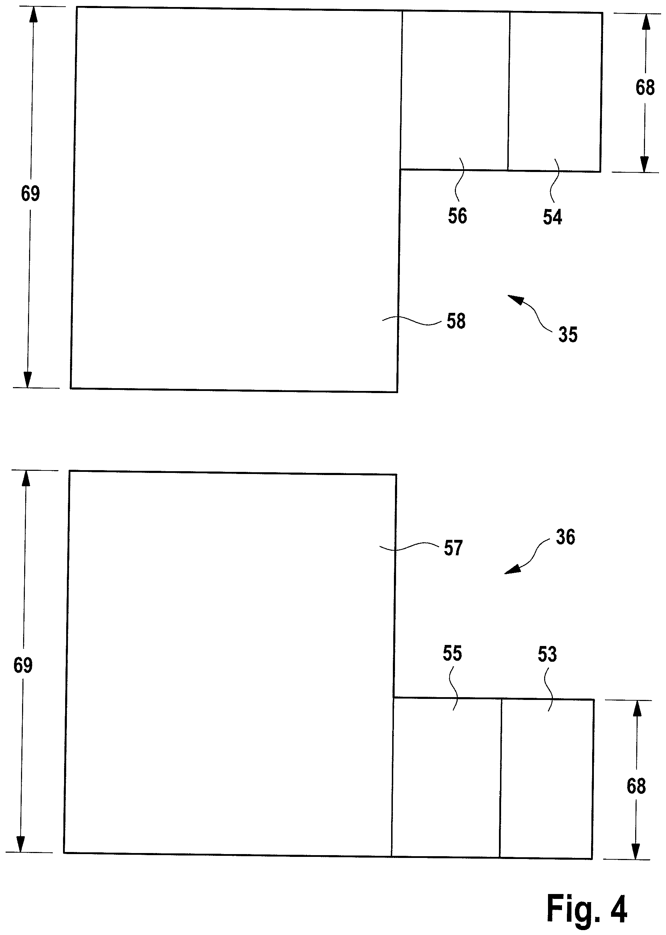

In Fig. 4 sind die beiden Betätiger 45 und 46 sehr schematisch und nicht maßstabsgetreu nebeneinander in ihrer Einbaulage gezeigt, wobei der obere Betätiger 36 in Fig. 4 unten gezeigt ist.

Wenn davon ausgegangen wird, dass sich die Blattfedern 57 und 58 jeweils in der Ebene der Zeichnung der Fig. 4 befinden, so liegt die Lasche 53 unterhalb der Zeichnungsebene, während die Lasche 54 oberhalb der Zeichnungsebene liegt.

Durch einfaches Umklappen kann der Betätiger 36 in die Lage des Betätigers 35 überführt werden.

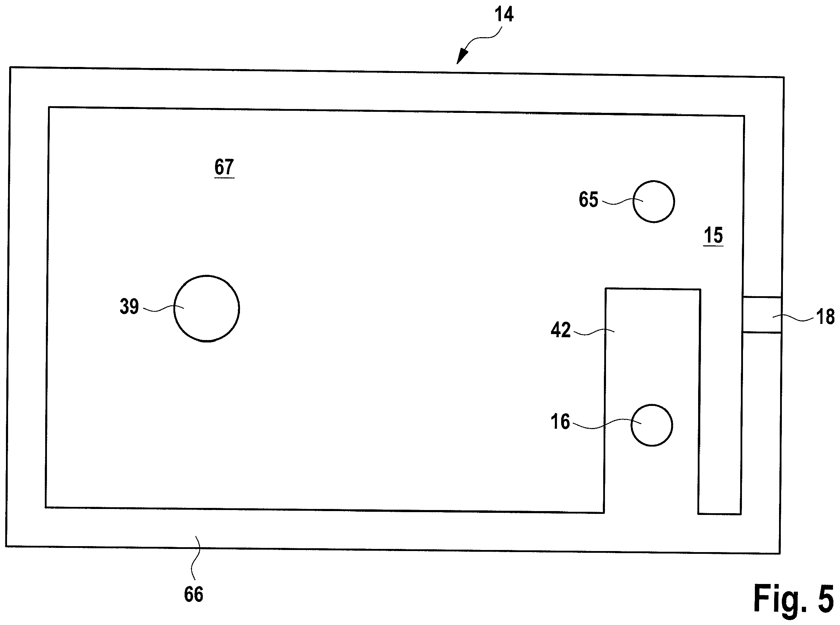

In Fig. 5 ist in einer Draufsicht das Unterteil 14 gezeigt, das einen umlaufenden Rand 66 aufweist, der den unteren Teil der Ventilkammer 15 begrenzt. In dem Rand 66 ist die untere Hälfte des dritten Anschlusskanals 18 ausgebildet.

Ferner ist in Fig. 5 der Steg 42 zu erkennen, durch den sich der erste Anschlusskanal 16 erstreckt.

Das Unterteil 14 weist einen von dem Rand 66 umschlossenen Boden 67 auf, in dem sich zum einen das Klemmelement 39, also vorzugsweise eine Stellschraube befindet, über die die Betätiger 35, 36 und der Biegewandler 21 symmetrisch eingespannt werden.

Ferner ist in den Boden 67 noch die Stellschraube 65 gezeigt, über die die Rückstelleinrichtung 61 des zweiten Ventils 28 in ihrer Federspannung eingestellt werden kann.

Das Oberteil 12 ist identisch zu dem Unterteil 14 aufgebaut.

Zurückkehrend zu Fig. 4 sei noch erwähnt, dass die Laschen 53 und 54 eine bei 68 angedeutete Breite aufweisen, die maximal die halbe Breite aufweisen wie die Blattfedern 57, 58, deren Breite bei 69 angedeutet ist.

## Patentansprüche

1. Mehrwegeventil mit einem Ventilgehäuse (11), in dem eine Ventilkammer (15) ausgebildet ist, und in die zumindest drei Anschlusskanäle (16, 17, 18) führen, wobei zwischen dem ersten und dem dritten Anschlusskanal (16, 18) ein erstes Ventil (37) und zwischen dem zweiten und dem dritten Anschlusskanal (17, 18) ein zweites Ventil (38) angeordnet ist, und wobei in dem Ventilgehäuse (11) ein elektrisch angesteuerter Aktor (19) angeordnet ist, der zumindest zwei Arbeitsstellungen aufweist, wobei der Aktor (19) in der ersten Arbeitsstellung auf das erste Ventil (37) und in der zweiten Arbeitsstellung auf das zweite Ventil (38) einwirkt,
**dadurch gekennzeichnet, dass** dem ersten Ventil (37) eine erste Rückstelleinrichtung (59) zugeordnet ist, die das erste Ventil (37) durch Federspannung in seine Ruhestellung vorspannt, und dem zweiten Ventil (38) eine zweite Rückstelleinrichtung (61) zugeordnet ist, die das zweite Ventil (38) durch Federspannung in seine Ruhestellung vorspannt.

2. Mehrwegeventil nach Anspruch 1, **dadurch gekennzeichnet, dass** der Aktor (19) eine stromlose Ruhestellung aufweist, in der er weder auf das erste noch auf das zweite Ventil (37, 38) einwirkt.

3. Mehrwegeventil nach Anspruch 1 oder 2, **dadurch gekennzeichnet, dass** der Aktor (19) ein piezoelektrischer Biegewandler (21) ist, der an seinem ersten Ende (22) in dem Ventilgehäuse (11) eingespannt ist, und mit seinem zweiten Ende (23) in der ersten Arbeitsstellung auf das erste Ventil (37) und in seiner zweiten Arbeitsstellung auf das zweite Ventil (38) einwirkt.

4. Mehrwegeventil nach einem der Ansprüche 1 bis 3, **dadurch gekennzeichnet, dass** die erste und/oder die zweite Rückstelleinrichtung (59, 61) in ihrer Federspannung einstellbar sind.

5. Mehrwegeventil nach einem der Ansprüche 1 bis 4, **dadurch gekennzeichnet, dass** der erste Anschlusskanal (16) über eine erste Kanalmündung (44) in die Ventilkammer (15) mündet, die erste Kanalmündung (44) mit einem ersten Ventilsitz (48) versehen ist, der mit einem ersten Dichtelement (51) zusammenwirkt, um die erste Kanalmündung (44) wahlweise zu verschließen oder freizugeben, und der zweite Anschlusskanal (17) über eine zweite Kanalmündung (45) in der Ventilkammer (15) mündet, die zweite Kanalmündung (45) mit einem zweiten Ventilsitz (49) versehen ist, der mit einem zweiten Dichtelement (52) zusammenwirkt, um die zweite Kanalmündung (45) wahlweise zu verschließen oder freizugeben.

6. Mehrwegeventil nach Anspruch 5, **dadurch gekennzeichnet, dass** der erste und/oder der zweite Ventilsitz (48, 49) axial verstellbar sind.

7. Mehrwegeventil nach Anspruch 5 oder 6, **dadurch gekennzeichnet, dass** der Aktor (19) in der ersten Arbeitsstellung mit dem ersten Dichtelement (51) und in der zweiten Arbeitsstellung mit dem zweiten Dichtelement (52) zusammenwirkt.

8. Mehrwegeventil nach einem der Ansprüche 5 bis 7, **dadurch gekennzeichnet, dass** ein erster Betätiger (36) vorgesehen ist, der das erste Dichtelement (51) trägt, und der an seinem ersten Ende (34) mit dem Ventilgehäuse (11) verbunden ist, wobei der Aktor (19) auf den Betätiger (36) wirkt.

9. Mehrwegeventil nach einem der Ansprüche 5 bis 8,**dadurch gekennzeichnet, dass** ein zweiter Betätiger (35) vorgesehen ist, der das zweite Dichtelement (52) trägt, und der an seinem ersten Ende (33) mit dem Ventilgehäuse (11) verbunden ist, wobei der Aktor (19) auf den Betätiger (35) wirkt.

10. Mehrwegeventil nach Anspruch 9, **dadurch gekennzeichnet, dass** der Aktor mit seinem ersten Ende (22) zwischen dem ersten Ende (34) des ersten Betätigers (36) sowie dem ersten Ende (33) des zweiten Betätigers (35) eingespannt ist.

11. Mehrwegeventil nach Anspruch 10, **dadurch gekennzeichnet, dass** zwischen dem ersten Ende (22) des Aktors (19) und dem ersten Ende (34) des ersten Betätigers (35) sowie dem ersten Ende (33) des zweiten Betätigers (35) jeweils ein elektrisch isolierender Abstandshalter (31, 32) angeordnet ist.

12. Mehrwegeventil nach einem der Ansprüche 5 bis 11, **dadurch gekennzeichnet, dass** die erste und die zweite Kanalmündung (44, 45) antiparallel in einer Trennebene (46) nebeneinander liegen.

13. Mehrwegeventil nach einem der Ansprüche 8 bis 12, **dadurch gekennzeichnet, dass** der erste und der zweite Betätiger (36, 35) an seinem ersten Ende (34, 33) jeweils eine Blattfeder (57, 58) und an seinem freien zweiten Ende jeweils eine Lasche (53, 54) aufweist, an der das jeweilige Dichtelement (51, 52) angeordnet ist, wobei die beiden Laschen (53, 54) antiparallel nebeneinander in einer Trennebene (46) liegen, wenn die beiden Ventile (37, 38) in ihrer Ruhestellung sind.

14. Mehrwegeventil nach Anspruch 13, **dadurch gekennzeichnet, dass** jede Lasche (53, 54) über einen Verbindungssteg (55, 56) mit der Blattfeder (57, 58) verbunden ist, wobei der Verbindungssteg (55, 56) unter einem Winkel zu der Blattfeder (57, 58) und zu der Lasche (53, 54) verläuft, und Lasche (53, 54) sowie Blattfeder (57, 58) jeweils parallel zueinander ausgerichtet sind.

15. Mehrwegeventil nach Anspruch 13 oder 14, **dadurch gekennzeichnet, dass** die Lasche (53, 54) maximal halb so breit ist wie die Blattfeder (57, 58).

## Claims

1. A multi-port valve having a valve housing (11) in which a valve chamber (15) is formed and into which at least three connection channels (16,17,18) lead, wherein a first valve (37) is arranged between the first and the third connection channel (16,18) and a second valve (38) is arranged between the second and the third connection channel (17,18), and wherein an electrically actuated actuator (19) comprising a at least two operating positions is arranged in the valve housing (11), wherein the actuator (19) acts on the first valve (37) in the first operating position and on the second valve (38) in the second operating position,
**characterized in that** the first valve (37) is associated with a first resetting device (59) that prestresses the first valve (37) to its rest position by spring tension, and that the second valve (38) is associated with a second resetting device (61) that prestresses the second valve (38) to its rest position by spring tension.

2. The multi-way valve according to claim 1, **characterized in that** the actuator (19) has a current-less resting position in which it acts neither on the first nor on the second valve (37,38).

3. The multi-way valve according to claim 1 or 2, **characterized in that** the actuator (19) is a piezoelectric bending transducer (21) which is clamped at its first end (22) in the valve housing (11), and which acts with its second end (23) on the first valve (37) in the first operating position and on the second valve (38) in its second operating position.

4. The multi-way valve according to anyone of Claims 1 to 3, **characterized in that** the first and/or the second resetting device (59, 61) are adjustable in their spring tension.

5. The multi-port valve according to anyone of Claims 1 to 4, **characterized in that** the first connection channel (16) flows into the valve chamber (15) via a first channel mouth (44), wherein the first channel mouth (44) is provided with a first valve seat (48) which cooperates with a first sealing element (51) to selectively close or open the first channel mouth (44), and wherein the second connection channel (17) flows into the valve chamber (15) via a second channel mouth (45), and wherein the second channel mouth (45) is provided with a second valve seat (49) which cooperates with a second sealing element (52) to selectively close or open the second channel mouth (45)

6. The multi-way valve according to claim 5, **characterized in that** the first and/or the second valve seat (48, 49) are axially adjustable.

7. The multi-way valve according to Claim 5 or 6, **characterized in that** the actuator (19) cooperates with the first sealing element (51) in the first operating position and with the second sealing element (52) in the second operating position.

8. The multi-way valve according to anyone of Claims 5 to 7, **characterized in that** a first activating actuator (36) is provided which supports the first sealing element (51) and which is connected at its first end (34) with the valve housing (11), wherein the actuator (19) acts on the activating actuator (36).

9. The multi-way valve according to anyone of Claims 5 to 8, **characterized in that** a second activating actuator (35) is provided which supports the second sealing element (52) and which is connected at its first end (33) with the valve housing (11), the actuator (19) acting on the activating actuator (35).

10. The multi-way valve according to claim 9, **characterized in that** the actuator with its first end (22) is clamped between the first end (34) of the first activating actuator (36) and the first end (33) of the second activating actuator (35).

11. The multi-way valve according to claim 10, **characterized in that** between the first end (22) of the actuator (19) and the first end (34) of the first actuator (35), and also the first end (33) of the second actuator (35), respectively, an electrically insulating spacer (31, 32) is arranged.

12. The multi-way valve according to anyone of Claims 5 to 11, **characterized in that** the first and the second channel mouth (44, 45) are located antiparallel in a separating plane (46) adjacent to one another.

13. The multi-way valve according to anyone of Claims 8 to 12, **characterized in that** the first and second activating actuators (36, 35) each comprise a leaf spring (57, 58) at their first end (34, 33), and a tab (53, 54) at their free second end, at which the respective sealing element (51, 52) is arranged, the two tabs (53, 54) being arranged antiparallel adjacent to one another in a separating plane (46) when the two valves (37, 38) are in their rest position.

14. The multi-way valve according to claim 13, **characterized in that** each tab (53, 54) is connected with the leaf spring (57, 58) via a connecting web (55, 56), the connecting web (55, 56) running at an angle with respect to the leaf spring (57, 58) and the tab (53, 54), and wherein the tab (53, 54) and the leaf spring (57, 58) are each aligned parallel with respect to one another.

15. The multi-way valve according to claim 13 or 14, **characterized in that** the tab (53, 54) is maximally half as wide as the leaf spring (57, 58).

## Revendications

1. Soupape à plusieurs voies avec un logement de soupape (11), dans laquelle est conçue une chambre de soupape (15) et vers laquelle mènent tout au moins trois canaux de raccordement (16, 17, 18) ;
dans laquelle une première soupape (37) est disposée entre le premier canal de raccordement et le troisième canal de raccordement (16, 18) et une deuxième soupape (38) est disposée entre le deuxième canal de raccordement et le troisième canal de raccordement (17, 18) ; et
dans laquelle un actionneur (19) à commande électrique est disposé dans le logement de soupape (11), lequel actionneur présente tout au moins deux positions de travail ;
dans laquelle l'actionneur (19) agit sur la première soupape (37) quand il se trouve dans la première position de travail et sur la deuxième soupape (38) quand il se trouve dans la deuxième position de travail ;
**caractérisée en ce qu'**une première position de rappel (59) est associée à la première soupape (37), laquelle sollicite la première soupape (37) dans sa position de repos par la tension du ressort, et une deuxième position de rappel (61) est associée à la deuxième soupape (38), laquelle sollicite la deuxième soupape (38) dans sa position de repos par la tension du ressort.

2. Soupape à plusieurs voies selon la revendication 1, **caractérisée en ce que** l'actionneur (19) présente une position de repos dépourvue de courant, dans laquelle il n'agit ni sur la première soupape, ni sur la deuxième soupape (37, 38).

3. Soupape à plusieurs voies selon la revendication 1 ou 2, **caractérisée en ce que** l'actionneur (19) est un transducteur piézoélectrique de flexion (21), lequel est maintenu par serrage dans le logement de soupape (11) au niveau de sa première extrémité (22), et lequel agit, avec sa deuxième extrémité (23), sur la première soupape (37), dans la première position de travail, et sur la deuxième soupape (38), dans sa deuxième position de travail.

4. Soupape à plusieurs voies selon l'une des revendications 1 à 3, **caractérisée en ce que** la tension du ressort de la première position de rappel et/ou de la deuxième position de rappel (59, 61) peut être réglée.

5. Soupape à plusieurs voies selon l'une des revendications 1 à 4, **caractérisée en ce que** le premier canal de raccordement (16) débouche dans la chambre de soupape (15) par l'intermédiaire d'une première embouchure de canal (44) ;
dans laquelle la première embouchure de canal (44) est pourvue d'un premier siège de soupape (48) qui interagit avec un premier élément d'étanchéité (51) en vue, soit de fermer, soit d'activer la première embouchure de canal (44) ; et **caractérisée en ce que** le deuxième canal de raccordement (17) débouche dans la chambre de soupape (15) par l'intermédiaire d'une deuxième embouchure de canal (45) ;
dans laquelle la deuxième embouchure de canal (45) est pourvue d'un deuxième siège de soupape (49) qui interagit avec un deuxième élément d'étanchéité (52) en vue, soit de fermer, soit d'activer la deuxième embouchure de canal (45).

6. Soupape à plusieurs voies selon la revendication 5, **caractérisée en ce que** le premier siège de soupape et/ou le deuxième siège de soupape (48, 49) peuvent être ajustés de manière axiale.

7. Soupape à plusieurs voies selon la revendication 5 ou 6, **caractérisée en ce que** l'actionneur (19) interagit avec le premier élément d'étanchéité (51) dans la première position de travail et avec le deuxième élément d'étanchéité (52) dans la deuxième position de travail.

8. Soupape à plusieurs voies selon l'une des revendications 5 à 7, **caractérisée en ce qu'**un premier dispositif d'actionnement (36) est prévu, lequel supporte le premier élément d'étanchéité (51) et lequel est raccordé au logement de soupape (11) par sa première extrémité (34), dans laquelle l'actionneur (19) agit sur le dispositif d'actionnement (36).

9. Soupape à plusieurs voies selon l'une des revendications 5 à 8, **caractérisée en ce qu'**un deuxième dispositif d'actionnement (35) est prévu, lequel supporte le deuxième élément d'étanchéité (52) et lequel est raccordé au logement de soupape (11) par sa première extrémité (33), dans laquelle l'actionneur (19) agit sur le dispositif d'actionnement (35).

10. Soupape à plusieurs voies selon la revendication 9, **caractérisée en ce que** l'actionneur est maintenu par serrage par sa première extrémité (22) entre le premier extrémité (34) du premier dispositif d'actionnement (36), ainsi qu'entre la première extrémité (33) du deuxième dispositif d'actionnement (35).

11. Soupape à plusieurs voies selon la revendication 10, **caractérisée en ce qu'**un écarteur (31, 32) électriquement isolant est disposé respectivement entre la première extrémité (22) de l'actionneur (19) et la première extrémité (34) du premier dispositif d'actionnement (35), ainsi que la première extrémité (33) du deuxième dispositif d'actionnement (35).

12. Soupape à plusieurs voies selon l'une des revendications 5 à 11, **caractérisée en ce que** la première embouchure de canal et la deuxième embouchure de canal (44, 45) sont disposées l'une à côté de l'autre, de manière antiparallèle, dans un plan de séparation (46).

13. Soupape à plusieurs voies selon l'une des revendications 8 à 12, **caractérisée en ce que** le premier dispositif d'actionnement et le deuxième dispositif d'actionnement (36, 35) présentent respectivement un ressort à lame (57, 58) au niveau de leur première extrémité (34, 33) et une languette (53, 54) au niveau de leur deuxième extrémité libre, au niveau de laquelle est disposé l'élément d'étanchéité (51, 52) respectif, dans laquelle les deux languettes (53, 54) sont disposées l'une à côté de l'autre, de manière antiparallèle, dans un plan de séparation (46) quand les deux soupapes (37, 38) se trouvent dans leur position de repos.

14. Soupape à plusieurs voies selon la revendication 13, **caractérisée en ce que** chaque languette (53, 54) est reliée au ressort à lame (57, 58) par l'intermédiaire d'une barrette de liaison (55, 56) ;
dans laquelle la barrette de liaison (55, 56) s'étend en formant un angle en direction du ressort à lame (57, 58) et en direction de la languette (53, 54) ; et dans laquelle la languette (53, 54) ainsi que le ressort à lame (57, 58) sont alignés respectivement parallèlement l'un vis-à-vis de l'autre.

15. Soupape à plusieurs voies selon la revendication 13 ou 14, **caractérisée en ce que** la languette (53, 54) est tout au plus à moitié aussi large que le ressort à lame (57, 58).
